(19) Europäisches Patentamt
European Patent Office
Office européen des brevets

(11) **EP 3 047 593 B1**

(12) **EUROPEAN PATENT SPECIFICATION**

(45) Date of publication and mention
of the grant of the patent:
**02.09.2020  Bulletin 2020/36**

(51) Int Cl.:
*H04L 5/00* *(2006.01)*          *H04L 27/26* *(2006.01)*
*H04L 1/00* *(2006.01)*

(21) Application number: **13776592.1**

(22) Date of filing: **17.09.2013**

(86) International application number:
**PCT/SE2013/051078**

(87) International publication number:
**WO 2015/041576 (26.03.2015 Gazette 2015/12)**

(54) **METHODS AND APPARATUS FOR UPLINK RESOURCE ASSIGNMENT**

VERFAHREN UND VORRICHTUNG ZUR UPLINK-RESSOURCENZUWEISUNG

PROCÉDÉS ET APPAREIL POUR L'AFFECTATION DE RESSOURCES DE LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.07.2016  Bulletin 2016/30**

(73) Proprietor: **Telefonaktiebolaget LM Ericsson
(publ)
164 83 Stockholm (SE)**

(72) Inventors:
• **HESSLER, Martin**
**S-587 58 Linköping (SE)**
• **FRÖBERG OLSSON, Jonas**
**S-590 74 Ljungsbro (SE)**
• **ERIKSSON, Erik**
**S-585 93 Linköping (SE)**
• **GUNNARSSON, Fredrik**
**S-587 50 Linköping (SE)**

(74) Representative: **Zacco Sweden AB
P.O. Box 5581
114 85 Stockholm (SE)**

(56) References cited:
**WO-A1-2010/114446     US-A1- 2013 010 660**

• **ERICSSON ET AL: "Details on UL DMRS", 3GPP
DRAFT; R1-120882 UL DMRS, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. Dresden,
Germany; 20120206 - 20120210, 13 February 2012
(2012-02-13), XP050563371, [retrieved on
2012-02-13]**
• **NOKIA SIEMENS NETWORKS ET AL: "Uplink DM
RS from CoMP viewpoint", 3GPP DRAFT;
R1-091760, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, no. San
Francisco, USA; 20090428, 28 April 2009
(2009-04-28), XP050339285, [retrieved on
2009-04-28]**
• **NTT DOCOMO: "Uplink DM-RS Resource
Assignment for LTE-Advanced", 3GPP DRAFT;
R1-101223 UL DMRS, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. San
Francisco, USA; 20100222, 16 February 2010
(2010-02-16), XP050418739, [retrieved on
2010-02-16]**

Description

## TECHNICAL FIELD

The disclosure relates to uplink resource assignment, and more specifically to a wireless terminal and a radio network node, as well as to methods for transmitting uplink data in response to a received assignment and for decoding the uplink data.

## BACKGROUND

3GPP Long Term Evolution (LTE) is the fourth-generation mobile communication technologies standard developed within the 3rd Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an UTRAN and an E-UTRAN, a User Equipment (UE) is wirelessly connected to a Radio Base Station (RBS) commonly referred to as a NodeB (NB) in UMTS, and as an evolved NodeB (eNodeB) in LTE. An RBS is a general term for a radio network node capable of transmitting radio signals to a UE and receiving signals transmitted by a UE. The eNodeB is a logical node in LTE and the RBS is a typical example of a physical implementation of an eNodeB. A UE may more generally be referred to as a wireless device or a wireless terminal.

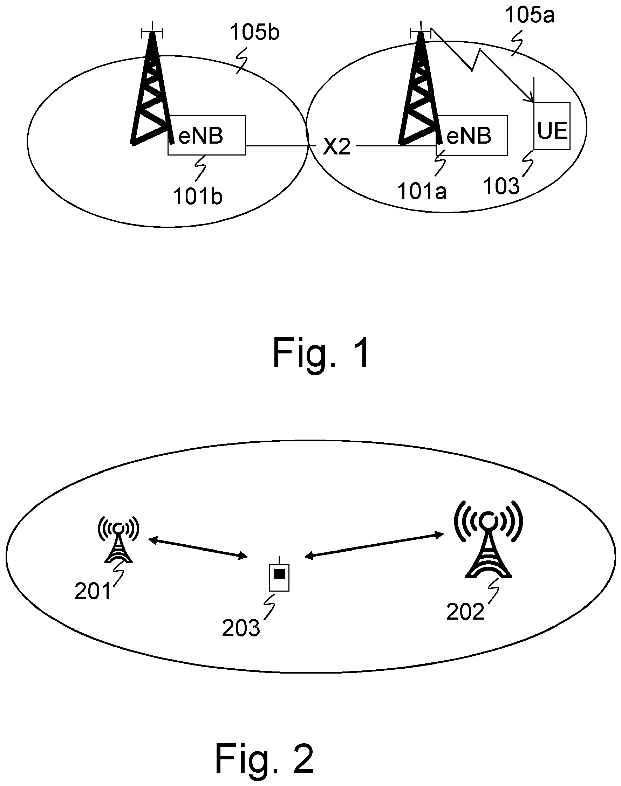

**Figure 1** illustrates a radio access network in an LTE system. An eNodeB 101a serves a UE 103 located within the eNodeB's geographical area of service or the cell 105a. The eNodeB 101a is connected to a core network. The eNodeB 101a is also connected via an X2 interface to a neighboring eNodeB 101b serving another cell 105b. LTE uses a scheduled Media Access Control (MAC) protocol, which implies that the UE radio resources in many ways are controlled by the eNodeB serving the UE. The usage of the radio resources can be optimized by the eNodeB if the UE's resources are known and fully controlled by a single eNodeB.

An uplink scheduler at the eNodeB determines dynamically, for each Transmission Time Interval (TTI) which UEs that are to transmit data and on which uplink resources. The shared resources controlled by the eNodeB scheduler are the time-frequency resource units. In LTE the smallest time-frequency resource unit that may be assigned is referred to as a physical resource block (PRB). In addition to assigning the time-frequency resources to the UE, the eNodeB scheduler is also responsible for controlling the transport format, also called transmission formats, that the UE should use, such as payload size, Modulation and Coding Scheme (MCS), rank and pre-coding matrix. The basis for uplink scheduling is scheduling grants or assignments sent by the eNodeB containing the scheduling decision and providing the UE with information about the resources and the associated transport format to use for the uplink channel. In addition to the dynamic scheduling described above, semi-persistent scheduling (SPS) is possible. With SPS, the UE gets a scheduling decision together with an indication that the decision applies to every n:th subframe until further notice.

Similar to the downlink case, reference signals for channel estimation are also needed for the LTE uplink to enable coherent demodulation of different uplink physical channels at the receiver side. These reference signals are more specifically referred to as Demodulation Reference Signals (DMRS). DMRS are time multiplexed with other uplink transmissions from the same UE.

A number of improvements have been introduced in LTE and is under development in order to better utilize the channel and propagation properties for an LTE heterogeneous network deployment. These improvements can be an important component in enabling a deployment where uplink and downlink transmission end up or originate at different locations. One example, illustrated in **Figure 2,** is a deployment where two eNodeBs, 201 and 202, connected by a non-ideal backhaul provide dual-connectivity. A UE 203 can be connected to the two eNodeBs, 201 and 202, although the eNodeBs cannot quickly communicate with each other. Hence in this scenario the eNodeBs need to operate independently in the time frame of a TTI. This implies that the two eNodeBs, 201 and 202, are jointly in control of the UE's 203 resources during the TTI time frame.

In some systems such as in LTE, the uplink assignment is made by the eNodeB.

However, it is the UE that is fully aware of its transmission conditions such as its uplink power budget, whether it needs to transmit to other eNodeBs, and its buffer status. The uplink assignment is therefore often suboptimal. In some cases, a suboptimal assignment can be accepted, as maintaining full control in the eNodeB provides coordination gains and other gains. However, in other cases, the losses from the suboptimal assignment are more severe, as in the dual-connectivity case described above. This suboptimal assignment is in that case due to the inability of the eNodeBs to communicate on a per TTI bases over the non-ideal backhaul. However, to solve the problem using a faster backhaul can in many cases be impossible or at least very expensive.

In other example scenarios, the impairments of the knowledge of the UE state can lead to similar suboptimal assignments. For example, the reporting delay from a UE can imply that the knowledge used by the eNodeB for making a scheduling decision is wrong. One example that is quite common is when an eNodeB sends an uplink resource assignment to the UE based upon an estimated amount of buffer data in the UE that is smaller than the actual amount of buffer data. In this case at least one extra uplink transmission will occur, resulting in an extra amount of overhead associated with the extra uplink transmission which also consumes valuable resources.

One possible solution to the above described problem of suboptimal assignments is to assign a too large radio resource to a UE to encompass any extra need of resources by the UE. However, this would lead to unnecessary interference as the UE is forced to transmit over the whole resource allocation of the assignment even if it would not be needed.

WO 2010/114446 A1 provides a method and arrangement in a user equipment for link adaptation of signals sent from the user equipment to a base station.

## SUMMARY

It is therefore an object to address some of the problems outlined above, and to provide a solution making it possible to assign radio resources and transport formats adapted to the UE's situation thus avoiding suboptimal assignments. The invention is defined in the independent claims. Advantageous embodiments are set out in the dependent claims. Aspects or embodiments that do not fall under the scope of the claims are useful to understand the invention.

An advantage of embodiments is that it is possible to assign radio resources and transport formats to a UE that may be adapted to the actual need of the UE. This is beneficial as the usage of the assignment is flexible to changes in transmission conditions for the UE that are not known to the eNodeB when it sends its assignment. Suboptimal assignments are thus avoided.

Another advantage of embodiments is that the existing procedure for assigning resources and transport format to a UE may be used. Furthermore, when an alternative usage of the assignment is applied by the UE, this is signaled via a change related to the existing DMRS.

Still another advantage of embodiments is that an efficient usage of an assignment is made possible in a number of new use-cases such as Device-to-Device (D2D), self-backhauling and dual-connectivity.

A further advantage of embodiments is that performance in legacy deployments may be improved by allowing the system to handle uncertainties regarding UE resources and states, e.g. the uncertainty of the amount of data in the UE transmit buffer.

Other objects, advantages and features of embodiments will be explained in the following detailed description when considered in conjunction with the accompanying drawings and claims.

## BRIEF DESCRIPTION OF THE DRAWINGS

Figure 1 is a schematic illustration of an LTE radio access network.

Figure 2 is a schematic illustration of a dual-connectivity deployment in LTE.

Figure 3 is a signaling diagram illustrating embodiments of the invention.

Figures 4a-b are flowcharts illustrating the method in the wireless terminal according to embodiments.

Figure 5 is a flowchart illustrating the method in the radio network node according to embodiments.

Figures 6a-b are block diagram schematically illustrating the wireless terminal and the radio network node according to embodiments.

Figures 7a-c schematically illustrate a D2D use case.

Figures 8a-b schematically illustrate a dual connectivity use case.

## DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Embodiments are described in a non-limiting general context in relation to an example scenario in an E-UTRAN, where the radio network node responsible for scheduling of a wireless terminal is an eNodeB sending uplink assignments to a UE. However, it should be noted that the embodiments may be applied to any radio access network technology with uplink assignment procedures similar to those in an E-UTRAN.

In legacy networks the scheduler used for assignment of resources and transport formats have full control of the UEs' resource allocation. However, in a backhaul application, a D2D, or a dual connectivity use case, the network does not know in advance what resources and transport formats the UE can use or wants to use to communicate with the network. The assignment sent to the UE may thus be suboptimal. This problem is addressed by a solution where alternative usages of the assignment are allowed. The advantage is that the UE may select among the alternative usages when transmitting in uplink so as to adapt to the current UE situation. This implies that the eNodeB and the UE have prior knowledge of possible alternative usages of an assignment. The UE may select an alternative usage of the assignment based on a number of aspects, such as the UE's capabilities, or transmission mode. Furthermore, the different alternative usages are associated to different DMRSs respectively, which allows an indication of the applied alternative usage for the uplink data transmission via the DMRS signaling.

According to embodiments of the invention, a radio resource R, can be assigned to a UE by an eNodeB, although the usage of this particular resource R is not necessarily predetermined at the time of assignment. In some cases, a UE may find the assigned radio resource inappropriate given its transmission situation. The UE may therefore select an alternative usage of the radio resource that better suits its needs. The alternative usages are determined by the UE based on the received assignment. The alternative usages may comprise alternative transmission parameters for different transport formats and/or alternative resource usages. They may for example correspond to alternative usages of the time/frequency resources assigned, to other MCS or pre-coding than assigned, and/or to less layers/another rank than assigned. Each alternative usage is associated with a respectively different DMRS. The selected alternative usage may thus be signaled to the eNodeB through the signaling of the DMRS associated with the selected alternative usage.

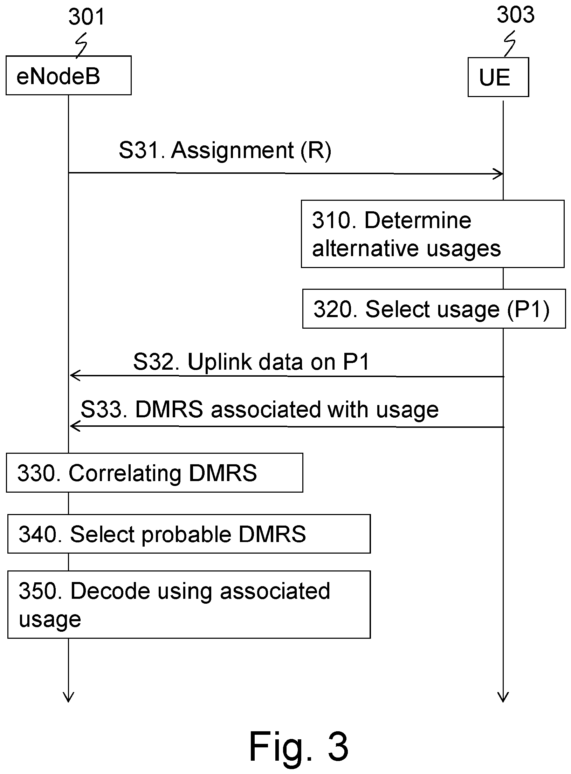

An embodiment of the invention is illustrated in the signaling diagram of **Figure 3.** In S.31, an eNodeB 301 sends an assignment to a UE 303 for an uplink transmission. The assignment provides the UE with information about what time-frequency resources - denoted R in the diagram - that the UE may use for its transmission of uplink data. The UE may then in 310 determine alternative usages of the assignment. The UE may e.g. be configured such that it can use either 100% or 50% of the assigned resources R, i.e. the complete amount of assigned resouces R, or half of the resources R. The alternative usage "50% of R" is denoted P1 in the signaling diagram. Assuming that the UE may not need more resources than P1 given the state it is in, the UE would thus in 320 select the usage "50% of R", i.e. P1, for its uplink transmission. Each alternative usage of the assignment is associated with a specific DMRS. In one example embodiment, the usage "50% of R" is associated with a first cyclic shift (CS) of the DMRS, and the usage "100% of R" is associated with a second CS of DMRS. The UE 303 may thus transmit uplink data on the resources P1 in S.32. In S.33, the UE 303 transmits the DMRS with the first CS that is associated with the usage of "50% of R" to the eNodeB 301. The eNodeB 301 may in 330 correlate the received DMRS with the two possible DMRSs, i.e. the DMRS with the first CS and the DMRS with the second CS. In this way the eNodeB 301 may deduce a probable DMRS based on the correlation in 340. In this example embodiment, the DMRS with the first CS will be deduced with high probability. As the DMRS with the first CS is associated with the usage "50% of R", the eNodeB 301 will with a high probability be able to decode the received uplink data in 350 knowing that the uplink data is received on P1. It should be noted that the eNodeB cannot be 100% sure which alternative usage that is used By the UE. However, the correlation with the alternative DMRS will provide likeliness for each of the alternative usages. The eNodeB may select one or more alternative usages that are most likely used and may try to decode the data for more than one alternative usage.

In the example embodiment described with reference to **Figure 3,** the alternative usages of the assignment are associated with different DMRS, differing with regards to the CS. However, other alternatives for the different DMRSs used to signal an alternative usage of the assignment are possible. Some alternative embodiments are described in the following three paragraphs.

DMRS cyclic shift signaling

As already described above, it is possible to apply a number of different CSs to a DMRS which is based on a particular base sequence. The DMRS may thus carry additional information through the CS, and the CS may be used to signal what alternative usage of the assignment that the UE has selected for its uplink transmission. This solution is exemplified by the embodiment described above with reference to **Figure 3.** Some or all of the possible CS of the DMRS may thus be used to signal a change in how the assigned radio resource R is used. However, it is of course also possible to signal a use of alternative MCS instead of use of alternative time-frequency resource with the CS of the DMRS, or any other variants of alternative usages of the assignment.

Power sensing

A flexible solution is to allow the UE to change both the uplink data allocation and the DMRS allocation. Different DMRS allocations may be used to signal an alternative usage of the assignment. Each reduction in the number of used time-frequency resources or PRBs may e.g. map to a new DMRS allocation. When the UE selects an alternative usage for uplink data by selecting a lower number of PRBs than assigned, the following alternatives with regards to the DMRS allocation may be possible:

- DMRS is still sent over the whole assigned PRB allocation. This enables the eNodeB to better correlate with alternative DMRS, e.g. different CS DMRS.

- DMRS is only sent over the PRBs of the alternative usage. Detection and correlation of DMRS will then be more sensitive to noise.

In the latter case of DMRS allocation, a matched filter may be used to detect the DMRS allocation. A channel estimate may be done and thereby also a power estimate for the channel estimate. For a reasonable Signal to Interference and Noise Ratio (SINR) this will give a good performance for detecting the DMRS allocation. The method is referred to as power sensing. This solution may in one embodiment be combined with the CS solution described in the previous section. The alternative usages of the transport format assigned, such as alternative usages of the MCS, may be signaled with different CS of the DMRS as described above. The DMRS may thus differ both with regards to the CS used and with regards to the allocation of the DMRS.

If the DMRS associated with different alternative usages of the assignment only differ with regards to the DMRS allocation used, power sensing may be used to detect the DMRS as described above. However, using only a power estimate could perform significantly worse than an embodiment using a known pre-agreed DMRS allocation for each resource reduction or alternative usage of the assignment. The power sensing is therefore combined with a decoding attempt of the uplink data and a Cyclic Redundancy Check (CRC) to check if the decoding attempts is successful or not. As power sensing is more sensitive to noise, the selection of a single alternative usage to continue with for decoding increases the likeliness of a failed decoding. Therefore, it may be better to blindly test a number of hypotheses regarding different DMRS allocations associated to different alternative usages of the assignment. If computing power at the receiver is not limited, a decoding and the CRC check may be performed for all of the hypotheses. In a worst case scenario of poor SINR, all of the alternative usages may need to be tested anyhow. To reduce the need for computing resources at the receiver, it may be preferred to use a limited number of alternative usages of the assignment in order to avoid too many tests.

Rank selection

When the assignment transmitted by the eNodeB is for a multi-layer Single User-Multiple Input Multiple Output (SU-MIMO) transmission, one possibility to signal alternative usages of the assignment is to do it via a rank selection. The eNodeB may be able to detect on what layer that the DMRS is transmitted, which indicates a rank selection. Each layer may potentially be associated with different HARQ processes or the same HARQ process depending on the used and supported MIMO formats. Therefore, either a separate decoding and CRC check may be done per layer and associated DMRS, or the decoding and CRC check may be done jointly over multiple layers (multiple DMRS). In one embodiment, the UE may dynamically chose how many layers to use for its transmission depending on what alternative usages of the assignment that it has selected for its uplink transmission. It may thus be sufficient for the eNodeB to know the association between a rank selection and the different alternative usages of the assignment to deduce how to decode the uplink data.

Determining the alternative usages

As already described above, the alternative usages of an assignment are determined by the UE based on the received assignment. The alternative usages may comprise different transport formats and/or different time-frequency resource usages. In one example embodiment, the alternative usage is defined as a predetermined subset selection of the assigned radio resource R. The subset selection may be tabulated, or it may be calculated using a predetermined function. Assuming that the radio resource $R=\{r\_1, r\_2, ..., r\_N\}$ consists of N PRBs, one example of how to determine subset selections of the assigned resources R is to use the following pre-determined split function:

$$S = \text{Round} \left( (n\text{-}cs)/n * N \right) \qquad [1]$$

where n is the total number of cyclic shifts used for DMRS, and cs is the index of the cyclic shift used for the DMRS. The subset selection P1 of the resource R is then defined as:

$$P1 = \{r\_1, r\_2, \ldots, r\_S\}. \qquad [2]$$

It is also possible to use the remaining subset P2 of the PRBs determined by the function S in a similar manner, where P2 is defined as:

$$P2 = \{r\_\{S+1\}, r\_\{S+2\}, \ldots, r\_N\}. \qquad [3]$$

Another example of a direct mapping is to decide the set of PRBs to use as a function of the cyclic shift index of the DMRS, e.g. as every (cs+1)'th PRB.

In general, it is possible to use any pre-determined mapping, e.g. from a CS to a specific sub-set of PRBs in R. The mapping could be specified using a function, a table or any other method defining a mapping. The mapping may not necessarily be a one-to-one mapping, as the selection of an alternative usage may be based also on other parameters.

The CS can also be used to signal an alternative usage of the assigned MCS. If the MCS provided in the assignment is denoted M, alternative usages of the assignment can be determined in analogy with the above described alternative resource usages based on a predetermined function. Some examples of how to determine the MCS usage are given in the following, where cs denotes the index of CS used for the DMRS:

- MCS=M if cs = 0, MCS=M-1 if cs = 1, MCS=M-2 if cs = 2, etc.

- MCS=M+1 if cs = 1, MCS=M+2 if cs = 2, etc.

- Use the most robust MCS, or a configurable default MCS for a specific cs, for example cs>1

In general, any pre-determined MCS is possible as alternative usage, and it may be defined relative to the assigned MCS. The used MCS can be seen as a function of the CS, or as a function of the assigned MCS.

The way to determine the allocation of PRBs and of MCS could also be done jointly, i.e. determining that both alternative MCS M and alternative PRBs P1 should be used. As one example the allocation of PRBs could be reduced and the MCS could be increased to preserve the number of transmitted bits. It is also possible to use an increased MCS if the assignment of resources R is too small to empty the UE buffer.

Configuration of alternative usages and associations with DMRS

As described above, the alternative usages may be determined by the UE based on the received assignment, and each alternative usage of the assignment is associated with a different DMRS. In one embodiment of the invention, the UE is configured with how to determine the alternative usages of the assignment, and with the associations between the alternative usages of the assignment and the different DMRSs.

Different signaling options for the configuration of the UE are possible. As different UEs may have different capabilities and also different needs, the eNodeB may in one embodiment acquire information regarding if the UE supports the described mechanisms of determining alternative usages of an assignment. It is only a UE that is capable of handling the alternative usages of an assignment that can make use of a signaled configuration. Furthermore, the configuration of alternative usages and the associations between alternative usages and different DMRS can be seen as an agreement between the eNodeB and UE. This agreement should be chosen such that it optimizes the behavior of the UE in a specific situation and state. Hereinafter, in the sections describing different use cases, it is described how the design of an agreement may vary depending on the use case.

In embodiments of the invention, the different DMRS alternatives may indicate different alternative usages of e.g. a resource assignment for different UEs. In one example, a first UE may operate in a D2D mode and a second UE may operate in a power limited mode. Hence, when the eNode receives an uplink transmission from the first of the two UEs, it is necessary for the eNodeB to know what agreement that applies for the first UE, such that the correct hypothesis regarding DMRS signaling and association with alternative usages is tested. This is enabled by the signaling options described hereinafter.

In a first embodiment, the alternative usages of an assignment may be configured by higher layers and may thus be signaled in a high layer configuration message, such as a Radio Resource Control (RRC) message or a broadcasted System Information message. The signaling of the configuration may be done using broadcast transmissions or jointly together with other signaling. As one example, a future configuration message for D2D operation specified to configure a D2D UE may also include a configuration of the alternative usages of an assignment and the corresponding associations with different DMRSs. Such signaling would thus reach all D2D UEs.

In a second embodiment, the configuration is done semi-statically by configuring the UE behavior using RRC reconfiguration messages, which thus reaches a specific UE.

In a third embodiments, one or more new Downlink Control Information (DCI) formats may be defined. A DCI format defines how an assignment is to be understood by a UE. A DCI message of a certain format may thus include information about the configuration of alternative usages. Either the DCI format itself or the content of the DCI message may carry the configuration information. It may be noted that such a new DCI format may anyhow be needed to support new services such as D2D and self-backhauling, and could therefor be designed to support configuration of alternative usages of an assignment. In this third embodiment, the configuration information is thus signaled per assignment.

In still another embodiment, multiple uplink DCIs valid for a same subframe may be used to signal the configuration. This may be done by sending multiple uplink DCIs in one subframe, using multiple of the Physical Downlink Control Channel (PDCCH) candidates. Another alternative is to use the SPS possibilities, where one or multiple SPS assignments are valid for a subframe. One or multiple DCIs can still be sent on PDCCH/EPDCCH where the terminal selects from all possible DCIs.

The different signaling embodiments described above may be used on their own or may be combined with each other in different ways.

## Methods and apparatus

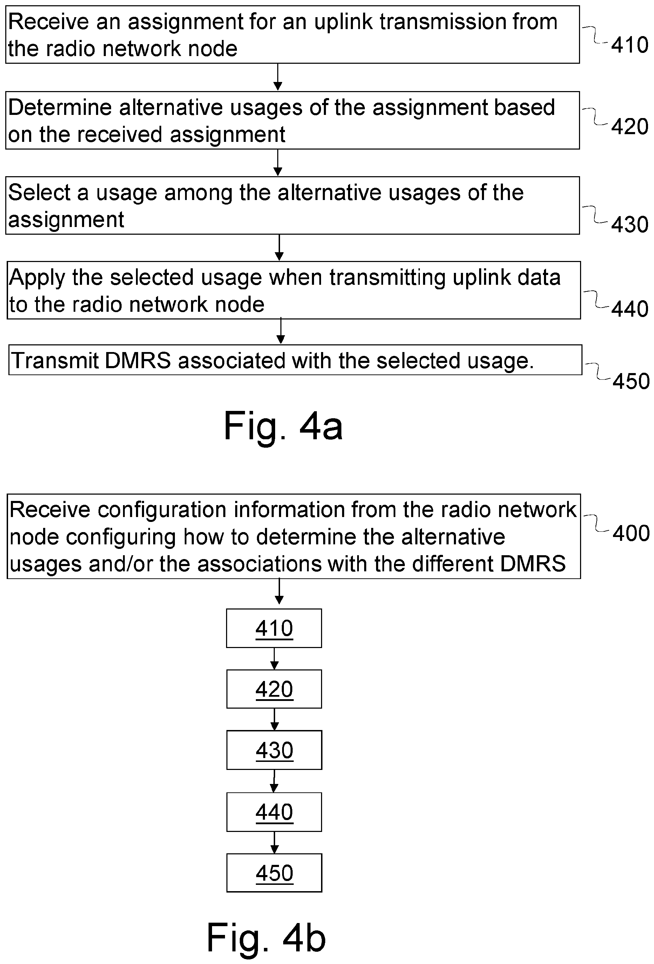

**Figure 4a** is a flowchart illustrating an embodiment of a method for uplink transmission performed in a wireless terminal served by a radio network node of a wireless communication system. As in the example embodiments described previously, the wireless terminal may be a UE, and the radio network node may be an eNodeB in LTE. The method comprises:

- 410: Receiving an assignment for an uplink transmission from the radio network node.

- 420: Determining alternative usages of the assignment based on the received assignment. Each alternative usage is associated with a different DMRS. The alternative usages of the assignment may comprise alternative usages of assigned time-frequency resources, and/or alternative usages of assigned transmission formats. The alternative usages may be determined based on a function of the received assignment. One example of a function used to determine the alternative usages is given in [1] and [2] above. Furthermore, the different DMRSs associated with the alternative usages may differ with respect to at least one of: a cyclic shift of the DMRS, an allocation of the DMRS, and a rank selection determining on what layers the DMRS is transmitted.

- 430: Selecting a usage among the alternative usages of the assignment. Selecting the usage may be based on at least one of: a capability of the wireless terminal, a transmission mode of the wireless terminal, a DCI format of the assignment, resources on which the assignment is received, and a rank granted in the assignment. As an example, an assignment received on a certain PRB set of the PDCCH may imply that the UE selects a certain alternative usage of the assignment, while another PRB set would imply another alternative usage.

- 440: Applying the selected usage when transmitting uplink data to the radio network node.

- 450: Transmitting the DMRS associated with the selected usage.

**Figure 4b** is a flowchart illustrating another embodiment of the method in the wireless terminal. The method comprises in addition to the steps 410-450 described above:

- 400: Receiving configuration information from the radio network node configuring at least one of the following: how to determine the alternative usages of the assignment; and the associations between the alternative usages and the different DMRSs. The configuration information may be received in at least one of the following: a system information message, a RRC reconfiguration message, and a DCI message. A system information message may e.g. be broadcasted to all UEs in a cell, and a RRC reconfiguration message may adapt the configuration of alternative usages to a specific UE.

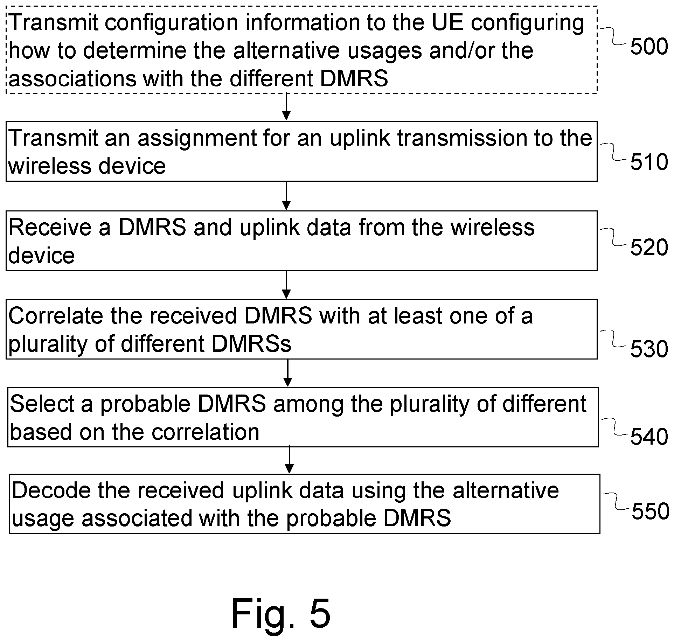

**Figure 5** is a flowchart illustrating an embodiment of a method for decoding uplink data received from a wireless terminal. The method is performed in a radio network node of a wireless communication system serving the wireless terminal. As in the example embodiments described previously, the wireless terminal may be a UE, and the radio network node may be an eNodeB in LTE. The method comprises:

- 500: The optional step of transmitting configuration information to the wireless terminal configuring at least one of the following: how to determine alternative usages of the assignment; and associations between the alternative usages and the different DMRSs. The configuration information may be transmitted in at least one of the following: a system information message, a RRC reconfiguration message, and a DCI message. A system information message may e.g. be broadcasted to all UEs in a cell, and a RRC reconfiguration message may adapt the configuration of alternative usages to a specific UE.

- 510: Transmitting an assignment for an uplink transmission to the wireless terminal.

- 520: Receiving a DMRS and uplink data from the wireless terminal in response to the assignment.

- 530: Correlating the received DMRS with at least one of a plurality of different DMRSs. Each different DMRS is associated with an alternative usage of the assignment. The alternative usages of the assignment may comprise alternative usages of assigned time-frequency resources, and/or alternative usages of assigned transmission formats. Furthermore, the different DMRSs associated with the alternative usages may differ with respect to at least one of: a cyclic shift of the DMRS, an allocation of the DMRS, and a rank selection determining on what layers the DMRS is transmitted.

- 540: Selecting a probable DMRS among the plurality of different DMRSs based on the correlation.

- 550: Decoding the received uplink data using the alternative usage associated with the probable DMRS.

In embodiments of the invention, different DMRS hypothesizes need to be tested to find the most probable DMRS used by the UE, and to make a correct assumption regarding what alternative usage of the assignment that the UE has applied for the uplink data transmission. As described above in the section related to power sensing, the method may thus additionally comprise the steps of performing a CRC of the decoded uplink data. If the CRC indicates a correct decoding, nothing further needs to be done. However, if the CRC indicates an error in the decoded uplink data, the method also comprises selecting a new probable DMRS based on the correlation, and decoding the received uplink data using the alternative usage associated with the new probable DMRS.

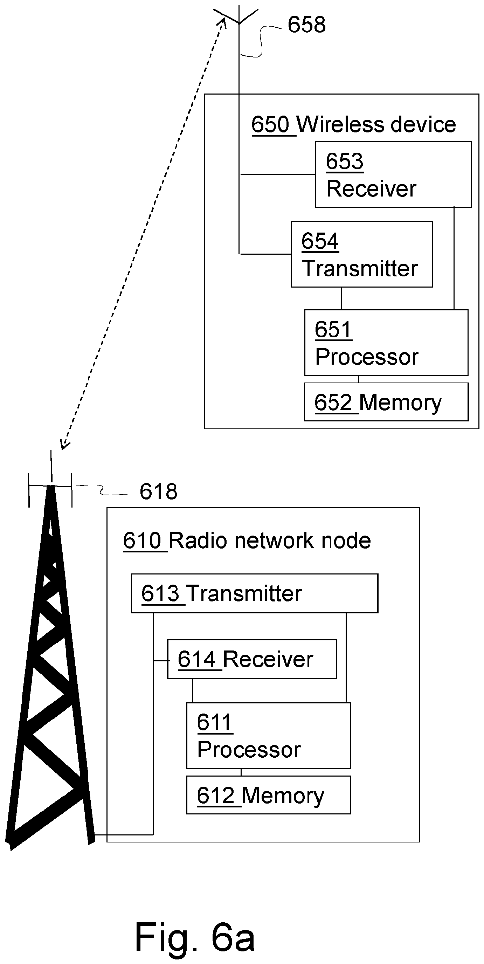

An embodiment of a wireless terminal 650 for uplink transmission configured to be served by a radio network node 610 of a wireless communication system, is schematically illustrated in the block diagram in **Figure 6a.** The wireless terminal 650 comprises a processor 651, a memory 652, a receiver 653, and a transmitter 654. The memory 652 contains instructions executable by said processor 651, whereby the wireless terminal 650 is operative to receive an assignment for an uplink transmission from the radio network node 610 via the receiver 653, and determine alternative usages of the assignment based on the received assignment. Each alternative usage is associated with a different DMRS. The wireless terminal 650 is further operative to select a usage among the alternative usages of the assignment, apply the selected usage when transmitting uplink data to the radio network node via the transmitter, and transmit the DMRS associated with the selected usage via the transmitter 654. The alternative usages of the assignment may comprise at least one of: alternative usages of assigned time-frequency resources, and alternative usages of assigned transmission formats. Furthermore, the memory 652 may contain instructions executable by said processor 651 whereby the wireless terminal is further operative to determine the alternative usages based on a function of the received assignment. The different DMRSs associated with the alternative usages may differ with respect to at least one of: a cyclic shift of the DMRS, an allocation of the DMRS, and a rank selection determining on what layers the DMRS is transmitted.

In embodiments, the memory 652 may contain instructions executable by said processor 651 whereby said wireless terminal is further operative to receive configuration information from the radio network node via the receiver 653. The configuration information may configure at least one of the following: how to determine the alternative usages of the assignment; and the associations between the alternative usages and the different demodulation reference signals.

In another embodiment, the memory 652 may contain instructions executable by the processor 651 whereby the wireless terminal is further operative to receive the configuration information in at least one of the following: a system information message, a RRC reconfiguration message, and a DCI message.

In another embodiment, the memory 652 may contain instructions executable by the processor 651 whereby the wireless terminal is further operative to select the usage based on at least one of: a capability of the wireless terminal, a transmission mode of the wireless terminal, a downlink control information format of the assignment, resources on which the assignment is received, and a rank granted in the assignment.

An embodiment of a radio network node 610 of a wireless communication system configured to decode uplink data received from a wireless terminal 650 served by the radio network node, is also schematically illustrated in the block diagram in **Figure 6a.** The radio network node comprises a processor 611, a memory 612, a transmitter 613, and a receiver 614. The memory contains instructions executable by the processor whereby the radio network node is operative to transmit an assignment for an uplink transmission to the wireless terminal via the transmitter 613, receive a DMRS and uplink data from the wireless terminal via the receiver 614 in response to the assignment, and correlate the received DMRS with at least one of a plurality of different DMRSs. Each different DMRS is associated with an alternative usage of the assignment. The alternative usage of the assignment may comprise at least one of: alternative usages of assigned time-frequency resources, and alternative usages of assigned transmission formats. Furthermore, the different DMRSs associated with the alternative usages may differ with respect to at least one of: a cyclic shift of the DMRS, an allocation of the DMRS, and a rank selection determining on what layers the DMRS is transmitted. The memory also contains instructions executable by the processor whereby the radio network node is operative to select a probable DMRS among the plurality of different DMRSs based on the correlation, and decode the received uplink data using the alternative usage associated with the probable DMRS.

In one embodiment, the memory 612 may contain instructions executable by said processor 611 whereby the radio network node is further operative to perform a CRC of the decoded uplink data. If the CRC indicates an error in the decoded uplink data, the radio network node is further operative to select a new probable DMRS based on the correlation, and decode the uplink data using the alternative usage associated with the new probable DMRS.

In another embodiment, the memory 612 may contain instructions executable by said processor 611 whereby the radio network node is further operative to transmit configuration information via the transmitter 613 to the wireless terminal 650 configuring at least one of the following: how to determine the alternative usage of the assignment; and the associations between the alternative usages and the different DMRSs. Further, the radio network node may be operative to transmit the configuration information in at least one of the following: a system information message, a RRC reconfiguration message, a DCI message.

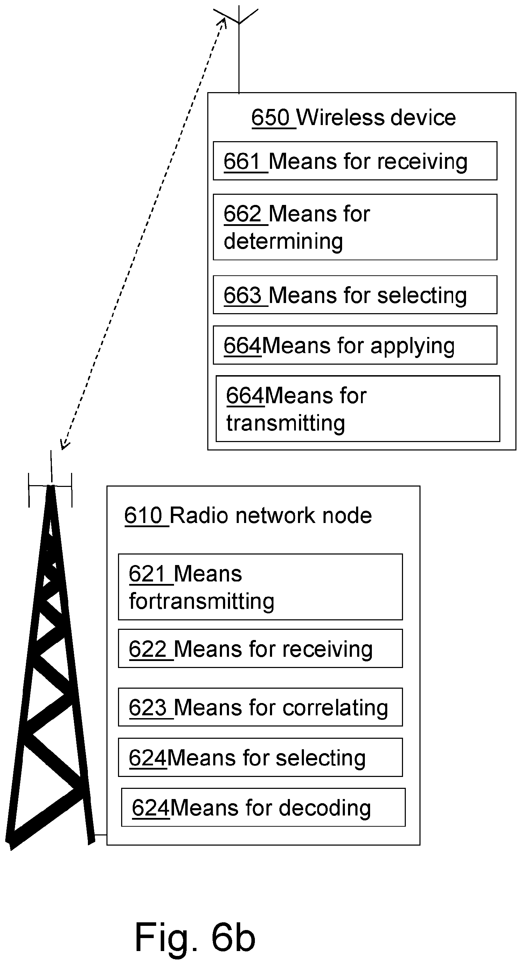

In an alternative way to describe the embodiment in **Figure 6a,** illustrated in **Figure 6b,** the wireless terminal 650 comprises means 661 adapted to receive an assignment for an uplink transmission from the radio network node via the receiver, and means 662 adapted to determine alternative usages of the assignment based on the received assignment. Each alternative usage is associated with a different DMRS. The wireless terminal 650 also comprises means 663 adapted to select a usage among the alternative usages of the assignment, means 664 adapted to apply the selected usage when transmitting uplink data to the radio network node via the transmitter, and means 665 adapted to transmit the DMRS associated with the selected usage via the transmitter. The radio network node 610 comprises means 621 adapted to transmit an assignment for an uplink transmission to the wireless terminal via the transmitter, and means 622 adapted to receive a DMRS and uplink data from the wireless terminal via the receiver in response to the assignment. The radio network node 610 also comprises means 623 adapted to correlate the received DMRS with at least one of a plurality of different DMRSs, each different DMRS being associated with an alternative usage of the assignment. The radio network node 610 further comprises means 624 adapted to select a probable DMRS among the plurality of different DMRSs based on the correlation, and means 625 adapted to decode the received uplink data using the alternative usage associated with the probable DMRS. The means described above are functional units which may be implemented in hardware, software, firmware or any combination thereof. In one embodiment, the means are implemented as a computer program running on a processor.

Use cases

*D2D*

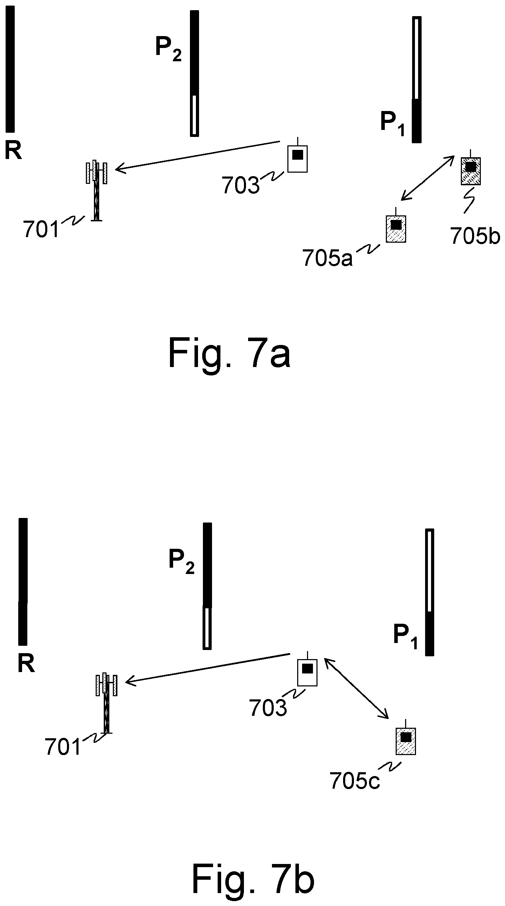

In a D2D deployment, a UE 703 is assigned resources R by an eNodeB 701. The resources R has to be shared for the communication with the network and the D2D communication. The UE is responsible for the usage of the assigned resources R for the D2D communication. Two D2D scenarios are possible, illustrated in **Figure 7a** and **Figure 7b** respectively. In **Figure 7a** the D2D communication takes place between two other UEs 705a and 705b than the UE 703 that receives the assignment. The D2D communication between the two other UEs 705a and 705b uses some part P1 of the radio resources R. The remaining resources P2 may thus be used for the communication between the UE 703 receiving the assignment and the eNodeB 701.

In **Figure 7b,** the D2D communication takes place between the UE 703 receiving the assignment and another UE 705c, on some part P1 of the radio resource R. And again, the remaining resources P2 can be used for communication between the UE 703 receiving the assignment and the eNodeB 701.

This use-case could also be a applicable for self-backhauling applications.

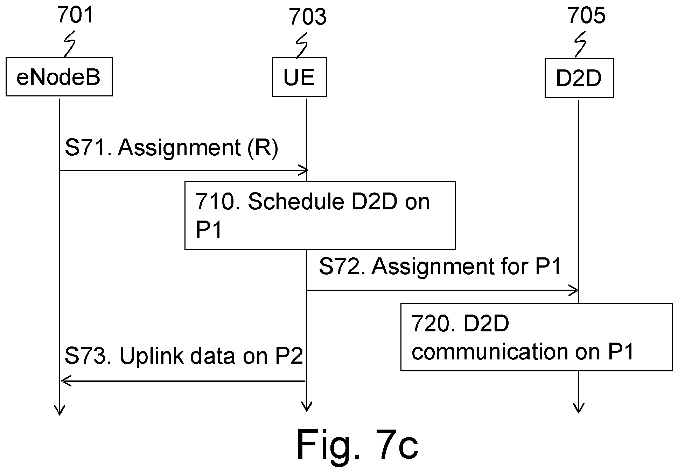

**Figure 7c** is a signaling diagram illustrating the method of assigning resources in a D2D use case. The eNodeB 701 transmits an assignment of resources R to the UE 703. The UE 703 determines what alternative usages of the assignment that are possible, and determines that P1 should be used for the D2D communication and P2 for the communication with the eNodeB 701. The D2D communication is scheduled on P1 in 710. In S.72 the assignment is sent for the D2D, and D2D communication may be performed on P1 in 720. In S.73 the UE 703 transmits uplink data on P2 and also signals the selected alternative usage via the DMRS signaling.

*Dual connectivity*

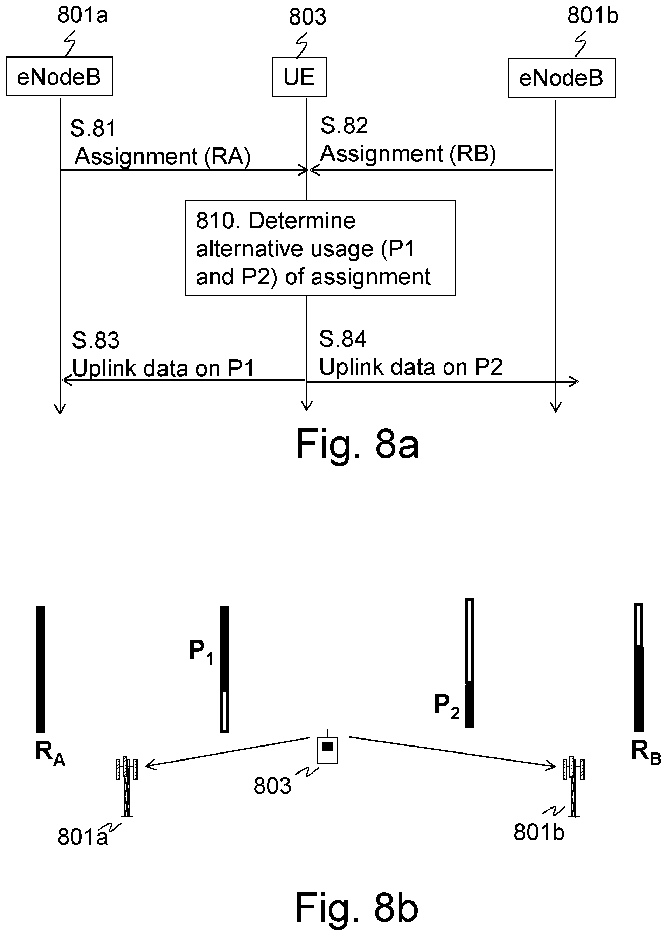

A dual connectivity use case is illustrated in **Figures 8a** and **8b.** A UE 803 is assigned to two eNodeBs 801a and 801b. The scheduling made by the first eNodeB 801a is unknown to the second eNodeB 801b. Hence, in case the UE 803 implements a single Power Amplifier (PA), and the scheduling from the first eNodeB 801a and the scheduling from the second eNodeB 801b are both valid for the same TTI, a UE may be forced to drop one transmission. Such a solution limits the benefits with dual connectivity strongly as this, for example, means that the possibility for simultaneous downlink/uplink transmissions is restricted. Therefore embodiments of the current invention address a solution making simultaneous uplink transmission possible for the first and the second eNodeB 801a and 801b. **Figure 8a** is a signaling diagram illustrating the signaling for such a use case. The first eNodeB 801a sends an assignment for resources RA, and the second eNodeB 801b sends an assignment for resources RB for the same TTI. If the assigned resources RA and RB are over-lapping or the UE is power limited and no power reduction is allowed, the UE may use the possibility of alternative usages of assigned resources to solve the situation. According to embodiments of the invention, the UE 803 may determine an alternative usage of the assignments, such that resources P1 which is a subset of the resources RA are used for the communication with the first eNodeB 801a, and resources P2 which is a subset of the resources RB are used for the communication with the second eNodeB 801b, which is also illustrated in **Figure 8b.**

*Power limited UE*

If a UE is assigned more resources than it has the power to use, the UE may reduce the power on the allocation in accordance to an alternative usage of the assignment. The lowered power setting would result in a drop in SINR. To maintain a target block-error rate, the UE may thus also need to change MCS, pre-coding and/or rank. The UE may in one example select an alternative usage comprising another MCS than assigned. The alternative usage could be signaled as described above using DMRS signaling. Any of the different alternatives of DMRS signaling may be used in this case.
The alteration of e.g. MCS or rank may also be predetermined. In one example, if the UE use a power setting that is 3 dB lower than what is assumed by the eNodeB, an MCS corresponding to a 3 dB lower SINR would be used and thus signaled. Alternatively one layer could be dropped to indicate the alternative usage.

*Latency reduction and buffer uncertainty*

In many use cases the amount of buffered data in the UE is uncertain. This may be due to a number of factors, such as, a long reporting delay compared to the packet inter-arrival time. In many scenarios, latency sensitive services can benefit from getting a larger allocation to make sure that the UE can empty its buffer with the allocated uplink resources. The flexible allocation of uplink resource according to embodiments of the invention may also make it possible to allocate a larger amount of uplink resources to UEs, where some of the resources may not be used, without any large performance down-side.
The above mentioned and described embodiments are only given as examples and should not be limiting. Other solutions, uses, objectives, and functions within the scope of the accompanying patent claims may be possible.

**Claims**

1. A method for uplink transmission performed in a wireless terminal (650) served by a radio network node (610) of a wireless communication system, the method comprising:

   - receiving (410) an assignment for an uplink transmission from the radio network node,
   - determining (420) alternative usages of the assignment based on the received assignment, the alternative usages being another rank than assigned, each alternative usage being associated with a different demodulation reference signal,
   - selecting (430) a usage among the alternative usages of the assignment,
   - applying (440) the selected usage when transmitting uplink data to the radio network node, and
   - transmitting (450) the demodulation reference signal associated with the selected usage, wherein the different demodulation reference signals associated with the alternative usages differ with respect to a rank selection, the rank selection determining on what layers the demodulation reference signal is transmitted.

2. The method according to claim 1, further comprising:

- receiving (400) configuration information from the radio network node configuring at least one of the following: how to determine the alternative usages of the assignment; and the associations between the alternative usages and the different demodulation reference signals.

3. The method according to claim 2, wherein the configuration information is received (400) in at least one of the following: a system information message, a radio resource control reconfiguration message, and a downlink control information message.

4. The method according to any of the preceding claims, wherein the different demodulation reference signals associated with the alternative usages further differs with respect to at least one of: a cyclic shift of the demodulation reference signal, and an allocation of the demodulation reference signal.

5. The method according to any of the preceding claims, wherein selecting (430) the usage is based on at least one of: a capability of the wireless terminal, a transmission mode of the wireless terminal, a downlink control information format of the assignment, resources on which the assignment is received, a rank granted in the assignment.

6. A wireless terminal (650) for uplink transmission configured to be served by a radio network node (610) of a wireless communication system, the wireless terminal comprising a processor (651), a memory (652), a receiver (653), and a transmitter (654), said memory containing instructions executable by said processor whereby said wireless terminal is operative to:

- receive an assignment for an uplink transmission from the radio network node via the receiver,
- determine alternative usages of the assignment based on the received assignment, the alternative usages being another rank than assigned, each alternative usage being associated with a different demodulation reference signal,
- select a usage among the alternative usages of the assignment,
- apply the selected usage when transmitting uplink data to the radio network node via the transmitter, and
- transmit the demodulation reference signal associated with the selected usage via the transmitter, wherein the different demodulation reference signals associated with the alternative usages differ with respect to a rank selection, the rank selection determining on what layers the demodulation reference signal is transmitted.

7. The wireless terminal (650) according to claim 6, wherein said memory (652) contains instructions executable by said processor (651) whereby said wireless terminal is further operative to:

- receive configuration information from the radio network node via the receiver (653), configuring at least one of the following: how to determine the alternative usages of the assignment; and the associations between the alternative usages and the different demodulation reference signals.

8. A computer program comprising computer readable code which when run on a wireless terminal causes the wireless terminal to perform a method as claimed in any of claims 1-5.

9. A computer program product comprising a computer readable medium and a computer program according to claim 8, wherein the computer program is stored on the computer readable medium.


**Patentansprüche**

1. Verfahren zur Uplink-Übertragung, die in einem drahtlosen Endgerät (650) durchgeführt wird, das von einen Funknetzknoten (610) eines drahtlosen Kommunikationssystems bedient wird, das Verfahren umfassend:

- Empfangen (410) einer Zuweisung für eine Uplink-Übertragung von dem Funknetzknoten,
- Bestimmen (420) alternativer Verwendungen der Zuweisung basierend auf der empfangenen Zuweisung, wobei es sich bei den alternativen Verwendungen um einen anderen Rang als dem zugewiesenen handelt, wobei jede alternative Verwendung einem anderen Demodulationsreferenzsignal zugeordnet ist,
- Auswählen (430) einer Verwendung unter den alternativen Verwendungen der Zuweisung,
- Anwenden (440) der ausgewählten Verwendung, wenn Uplink-Daten an den Funknetzknoten übertragen werden, und

- Übertragen (450) des der ausgewählten Verwendung zugeordneten Demodulationsreferenzsignals, wobei sich die verschiedenen, den alternativen Verwendungen zugeordneten Demodulationsreferenzsignale in Bezug auf eine Rangauswahl unterscheiden, wobei die Rangauswahl bestimmt, auf welchen Schichten das Demodulationsreferenzsignal übertragen wird.

2. Verfahren nach Anspruch 1, ferner umfassend:

- Empfangen (400) von Konfigurationsinformationen von dem Funknetzknoten, durch die mindestens eines aus dem Folgenden konfiguriert wird: wie die alternativen Verwendungen der Zuweisung; und die Zuordnungen zwischen den alternativen Verwendungen und den verschiedenen Demodulationsreferenzsignalen zu bestimmen sind.

3. Verfahren nach Anspruch 2, wobei die Konfigurationsinformationen in mindestens einem aus dem Folgenden empfangen wird (400): eine Systeminformationsnachricht, eine Funkressourcen steuerungs rekonfigurationsnachricht und eine Downlink-Steuerungsinformationsnachricht.

4. Verfahren nach einem der vorhergehenden Ansprüche, wobei die unterschiedlichen Demodulationsreferenzsignale, die den alternativen Verwendungen zugeordnet sind, sich weiter in Bezug auf mindestens einem aus einer zyklischen Verschiebung des Demodulationsreferenzsignals und einer Zuteilung des Demodulationsreferenzsignals unterscheiden.

5. Verfahren nach einem der vorhergehenden Ansprüche, wobei das Auswählen (430) der Verwendung auf mindestens einem aus einer Leistungsfähigkeit des drahtlosen Endgeräts, einem Übertragungsmodus des drahtlosen Endgeräts, einem Downlink-Steuerungsinformationsformat der Zuweisung, Ressourcen, auf denen die Zuweisung empfangen wird, einem bei der Zuweisung vergebenen Rang basiert.

6. Drahtloses Endgerät (650) für eine Uplink-Übertragung, das dazu konfiguriert ist, von einem Funknetzknoten (610) eines drahtlosen Kommunikationssystems bedient zu werden, wobei das drahtlose Endgerät einen Prozessor (651), einen Speicher (652), einen Empfänger (653) und einen Sender (654) umfasst, wobei der Speicher durch den Prozessor ausführbare Anweisungen enthält, wobei das drahtlose Endgerät dazu betreibbar ist:

- eine Zuweisung für eine Uplink-Übertragung von dem Funknetzknoten über den Empfänger zu empfangen,
- alternative Verwendungen der Zuweisung basierend auf der empfangenen Zuweisung zu bestimmen, wobei es sich bei den alternativen Verwendungen um einen anderen Rang als dem zugewiesenen handelt, wobei jede alternative Verwendung einem anderen Demodulationsreferenzsignal zugeordnet ist,
- eine Verwendung unter den alternativen Verwendungen der Zuweisung auszuwählen,
- die ausgewählte Verwendung anzuwenden, wenn Uplink-Daten über den Sender an den Funknetzknoten übertragen werden, und
- das der ausgewählten Verwendung zugeordnete Demodulationsreferenzsignal über den Sender zu übertragen, wobei sich die verschiedenen, den alternativen Verwendungen zugeordneten Demodulationsreferenzsignale in Bezug auf eine Rangauswahl unterscheiden, wobei die Rangauswahl bestimmt, auf welchen Schichten das Demodulationsreferenzsignal übertragen wird.

7. Drahtloses Endgerät (650) nach Anspruch 6, wobei der Speicher (652) durch den Prozessor (651) ausführbare Anweisungen enthält, wobei das drahtlose Endgerät dazu betreibbar ist:

- über den Empfänger (653) Konfigurationsinformationen von dem Funknetzknoten zu empfangen, durch die mindestens eines aus dem Folgenden konfiguriert wird: wie die alternativen Verwendungen der Zuweisung; und die Zuordnungen zwischen den alternativen Verwendungen und den verschiedenen Demodulationsreferenzsignalen zu bestimmen sind.

8. Computerprogramm, umfassend computerlesbaren Code, der bei seiner Ausführung durch ein drahtloses Endgerät das drahtlose Endgerät dazu veranlasst, ein Verfahren nach einem der Ansprüche 1 bis 5 durchzuführen.

9. Computerprogrammprodukt, umfassend ein computerlesbares Speichermedium und ein Computerprogramm nach Anspruch 8, wobei das Computerprogramm auf dem computerlesbaren Speichermedium gespeichert ist.

**Revendications**

1. Procédé de transmission en liaison montante mis en œuvre dans un terminal sans fil (650) desservi par un nœud de réseau radio (610) d'un système de communication sans fil, le procédé comprenant :

   - la réception (410) d'une attribution pour une transmission en liaison montante depuis le nœud de réseau radio,
   - la détermination (420) d'usages alternatifs de l'attribution sur la base de l'attribution reçue, les usages alternatifs étant d'un autre rang que celui attribué, chaque usage alternatif étant associé à un signal de référence de démodulation différent,
   - la sélection (430) d'un usage parmi les usages alternatifs de l'attribution,
   - l'application (440) de l'usage sélectionné lors de la transmission de données de liaison montante au nœud de réseau radio, et
   - la transmission (450) du signal de référence de démodulation associé à l'usage sélectionné, dans lequel les différents signaux de référence de démodulation associés aux usages alternatifs diffèrent par rapport à une sélection de rang, la sélection de rang déterminant sur quelles couches le signal de référence de démodulation est transmis.

2. Procédé selon la revendication 1, comprenant en outre :

   - la réception (400) d'informations de configuration depuis le nœud de réseau radio configurant au moins l'un des suivants : comment déterminer les usages alternatifs de l'attribution ; et les associations entre les usages alternatifs et les différents signaux de référence de démodulation.

3. Procédé selon la revendication 2, dans lequel les informations de configuration sont reçues (400) dans au moins l'un des suivants : un message d'informations système, un message de reconfiguration de commande de ressource radio, et un message d'informations de commande de liaison descendante.

4. Procédé selon l'une quelconque des revendications précédentes, dans lequel les différents signaux de référence de démodulation associés aux usages alternatifs diffèrent en outre par rapport à au moins l'un parmi : un décalage cyclique du signal de référence de démodulation, et une allocation du signal de référence de démodulation.

5. Procédé selon l'une quelconque des revendications précédentes, dans lequel la sélection (430) de l'usage est basée sur au moins l'un parmi : une capacité du terminal sans fil, un mode de transmission du terminal sans fil, un format d'informations de commande de liaison descendante de l'attribution, des ressources sur lesquelles l'attribution est reçue, un rang accordé dans l'attribution.

6. Terminal sans fil (650) pour transmission en liaison montante configuré pour être desservi par un nœud de réseau radio (610) d'un système de communication sans fil, le terminal sans fil comprenant un processeur (651), une mémoire (652), un récepteur (653) et un émetteur (654), ladite mémoire contenant des instructions exécutables par ledit processeur moyennant quoi ledit terminal sans fil est opérationnel pour :

   - recevoir une attribution pour une transmission en liaison montante depuis le nœud de réseau radio via le récepteur,
   - déterminer des usages alternatifs de l'attribution sur la base de l'attribution reçue, les usages alternatifs étant d'un autre rang que celui attribué, chaque usage alternatif étant associé à un signal de référence de démodulation différent,
   - sélectionner un usage parmi les usages alternatifs de l'attribution,
   - appliquer l'usage sélectionné lors de la transmission de données de liaison montante vers le nœud de réseau radio via l'émetteur, et
   - transmettre le signal de référence de démodulation associé à l'usage sélectionné via l'émetteur, dans lequel les différents signaux de référence de démodulation associés aux usages alternatifs diffèrent par rapport à une sélection de rang, la sélection de rang déterminant sur quelles couches le signal de référence de démodulation est transmis.

7. Terminal sans fil (650) selon la revendication 6, dans lequel ladite mémoire (652) contient des instructions exécutables par ledit processeur (651) moyennant quoi ledit terminal sans fil est en outre opérationnel pour :

   - recevoir des informations de configuration depuis le nœud de réseau radio via le récepteur (653), configurant au moins l'un des suivants : comment déterminer les usages alternatifs de l'attribution ; et les associations entre les usages alternatifs et les différents signaux de référence de démodulation.

8. Programme informatique comprenant un code lisible par ordinateur qui lorsqu'il est exécuté sur un terminal sans fil amène le terminal sans fil à mettre en œuvre un procédé selon l'une quelconque des revendications 1 à 5.

9. Produit programme informatique comprenant un support lisible par ordinateur et un programme informatique selon la revendication 8, dans lequel le programme informatique est stocké sur le support lisible par ordinateur.

## Fig. 1

## Fig. 2

301

303

eNodeB

UE

S31. Assignment (R)

310. Determine alternative usages

320. Select usage (P1)

S32. Uplink data on P1

S33. DMRS associated with usage

330. Correlating DMRS

340. Select probable DMRS

350. Decode using associated usage

Fig. 3

Receive an assignment for an uplink transmission from the radio network node ⌐⌐ 410

↓

Determine alternative usages of the assignment based on the received assignment ⌐⌐ 420

↓

Select a usage among the alternative usages of the assignment ⌐⌐ 430

↓

Apply the selected usage when transmitting uplink data to the radio network node ⌐⌐ 440

↓

Transmit DMRS associated with the selected usage. ⌐⌐ 450

# Fig. 4a

Receive configuration information from the radio network node configuring how to determine the alternative usages and/or the associations with the different DMRS ⌐⌐ 400

↓

410

↓

420

↓

430

↓

440

↓

450

# Fig. 4b

Transmit configuration information to the UE configuring how to determine the alternative usages and/or the associations with the different DMRS — 500

Transmit an assignment for an uplink transmission to the wireless device — 510

Receive a DMRS and uplink data from the wireless device — 520

Correlate the received DMRS with at least one of a plurality of different DMRSs — 530

Select a probable DMRS among the plurality of different based on the correlation — 540

Decode the received uplink data using the alternative usage associated with the probable DMRS — 550

# Fig. 5

Fig. 6a

**650** Wireless device

**661** Means for receiving

**662** Means for determining

**663** Means for selecting

**664** Means for applying

**664** Means for transmitting

**610** Radio network node

**621** Means for transmitting

**622** Means for receiving

**623** Means for correlating

**624** Means for selecting

**624** Means for decoding

Fig. 6b

P₂

R

P₁

703

701

705a

705b

# Fig. 7a

P₂

R

P₁

703

701

705c

# Fig. 7b

701

703

705

eNodeB

UE

D2D

S71. Assignment (R)

710. Schedule D2D on
P1

S72. Assignment for P1

720. D2D
communication on P1

S73. Uplink data on P2

Fig. 7c

801a                          803                          801b

| eNodeB |                    | UE |                      | eNodeB |

S.81                          S.82
Assignment (RA)               Assignment (RB)

810. Determine
alternative usage (P1
and P2) of assignment

S.83                          S.84
Uplink data on P1             Uplink data on P2

## Fig. 8a

$P_1$

$P_2$

$R_A$

$R_B$

803

801a                                                     801b

## Fig. 8b

**EP 3 047 593 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010114446 A1